# EUROPÄISCHE PATENTSCHRIFT

(11) **EP 2 652 406 B1**
(45) Veröffentlichungstag und Bekanntmachung des Hinweises auf die Patenterteilung: **14.08.2019**
(21) Anmeldenummer: 11802025.4
(22) Anmeldetag: 12.12.2011
(51) Int. Cl.: F24C 7/08, A47L 15/42, D06F 39/00, G05G 1/08, H03K 17/965, G06F 3/0481

(54) **BEDIENVORRICHTUNG FÜR EIN HAUSGERÄT MIT EINEM ELEKTRONISCHEN ANZEIGEFELD UND HAUSGERÄT MIT EINER DERARTIGEN BEDIENVORRICHTUNG**
OPERATOR CONTROL DEVICE FOR A DOMESTIC APPLIANCE, HAVING AN ELECTRONIC DISPLAY PANEL, AND A DOMESTIC APPLIANCE HAVING SUCH AN OPERATOR CONTROL DEVICE
DISPOSITIF DE COMMANDE POUR APPAREIL MÉNAGER DOTÉ D'UN AFFICHEUR ÉLECTRONIQUE ET APPAREIL MÉNAGER DOTÉ D'UN DISPOSITIF DE COMMANDE DE CE TYPE

(30) Priorität: 16.12.2010 DE 102010063188
(43) Veröffentlichungstag der Anmeldung: 23.10.2013
(73) Patentinhaber: BSH Hausgeräte GmbH, 81739 München (DE)
(72) Erfinder: SACHON, Robert, 80469 München (DE); GOSS, Ulrich, 81539 München (DE)
(86) Internationale Anmeldenummer: PCT/EP2011/072416
(87) Internationale Veröffentlichungsnummer: WO 2012/080155

(56) Entgegenhaltungen:
- EP-A1- 1 873 609
- EP-A2- 0 844 325
- EP-A2- 1 258 878
- WO-A1-2010/073417
- WO-A2-2008/118999
- DE-A1- 10 035 592
- DE-A1-102005 032 508
- DE-A1-102005 032 509
- DE-A1-102006 026 187
- DE-A1-102009 001 980
- DE-U1-202005 019 978
- JP-A- 2001 053 854

## Beschreibung

Die Erfindung betrifft eine Bedienvorrichtung für ein Hausgerät, mit einem elektronischen Anzeigefeld, und einem Bedienelement, welches zur Einstellung von Betriebsbedingungen des Hausgeräts relativ zum Anzeigefeld bewegbar ist. Des Weiteren betrifft die Erfindung ein Hausgerät mit einer entsprechenden Bedienvorrichtung.

Bedienvorrichtungen für Haushaltsgeräte, beispielsweise Backöfen, Waschmaschinen, Wäschetrockner, Geschirrspüler oder dergleichen, sind in vielfältiger Ausgestaltung bekannt. Hierzu sind berührsensitive Bedienvorrichtungen mit Touchbereichen ebenso bekannt, wie Bedienelemente in Form von Drehschaltern, Drückschaltern, und somit derartigen Bedienelementen, die zur Einstellung von Betriebsbedingungen relativ zu einer Anzeigeeinheit bewegt werden müssen.

Gerade bei derartigen Bedienvorrichtungen mit bewegbaren Bedienelementen ist in Kombination mit elektronischen Anzeigefeldern als Anzeigeeinheiten ein kompakter Aufbau bei gleichzeitig nutzerfreundlicher Bedienbarkeit und intuitiv wahrnehmbarer Informationspräsentation schwierig bis nicht möglich. Die genannten Komponenten müssen separat und auch beabstandet zueinander angeordnet werden. Des Weiteren sind derartige Bedienelemente bekanntermaßen sehr groß und klobig ausgebildet, sodass sie einerseits viel Platz benötigen. Dies sowohl im Hinblick auf die generelle Größe als Knebel und somit Zylinder, als auch im Hinblick auf das Herauserstrecken aus der Bedienvorrichtung nach vorne, um deren Greifen und Drehen bewerkstelligen zu können.

Aus der DE 20 2005 019 978 U1 ist eine Bedienvorrichtung für ein Elektrogerät bekannt, welche einen Drehregler umfasst, welcher an einer Blende beziehungsweise Auflagefläche des Elektrogeräts gehaltert ist. Auf dem Drehregler ist ein weiteres Schaltmittel vorgesehen, und um den Drehregler herum können LED-Siebensegmentanzeigen angeordnet sein.

In der EP 0 844 325 A2 wird zur einfachen Einstellung und Anzeige von Grundprogrammen einer Waschmaschine mittels eines einzigen Schalters und eines einzigen Anzeigefelds vorgeschlagen, eine berührungslose Betätigungsübertragung in Form eines magnetoresistiven Schalters im Bereich des Anzeigefelds einzusetzen.

Die WO 2010073417 A1 beschreibt ein Mobiltelefon mit einem Drehknopf.

Es ist Aufgabe der vorliegenden Erfindung, eine Bedienvorrichtung für ein Hausgerät sowie ein Hausgerät mit einer entsprechenden Bedienvorrichtung zu schaffen, bei welcher bzw. bei welchem die Kombination zwischen einem elektronischen Anzeigefeld und einem relativ dazu bewegbaren Bedienelement kompakter und dennoch im Hinblick auf die Betätigung nutzerfreundlich und leichtgängig ausgebildet ist.

Diese Aufgabe wird durch eine Bedienvorrichtung, welche die Merkmale nach Anspruch 1 aufweist, und ein Hausgerät welches die Merkmale nach Anspruch 14 aufweist, gelöst.

Eine erfindungsgemäße Bedienvorrichtung für ein Hausgerät umfasst ein elektronisches Anzeigefeld und ein Bedienelement, welches zur Einstellung von Betriebsbedingungen des Hausgeräts relativ zum Anzeigefeld bewegbar ist. Das Bedienelement ist bereichsweise in eine Abdeckung des zumindest einen elektronischen Anzeigefelds eingebettet, und ein ringförmiges Vorderteil des Bedienelements ist mit seiner Oberseite bereichsweise erhaben über das Niveau einer Außenseite der Abdeckung überstehend angeordnet, wobei die Oberseite des ringförmigen Vorderteils trichterförmig ist. Durch diese Ausgestaltung im Hinblick auf die Formgebung des Vorderteils einerseits und die Anordnung andererseits ist eine sehr kompakte Bedienvorrichtung gerade im Hinblick auf die Komponenten des elektronischen Anzeigefelds und des Bedienelements gewährleistet. Durch die Ringform des Vorderteils und insbesondere der nach innen geneigten Oberseite ist die Berührbarkeit und Betätigbarkeit durch einen Finger eines Nutzers in besonderer Leichtgängigkeit und Zielsicherheit gewährleistet. Das Drehen des ringförmigen Vorderteils kann sehr präzise durch einen Nutzer durchgeführt werden.

Es ist vorgesehen, dass ein Außenrand des ringförmigen Vorderteils über die Oberseite der Abdeckung erhaben übersteht, insbesondere kleiner 1,5 mm, insbesondere kleiner 1 mm, übersteht. Dies ist eine besonders hervorzuhebende vorteilhafte Ausgestaltung. Denn gerade in Verbindung mit der trichterförmigen Oberseite des ringförmigen Vorderteils bzw. der schräg nach innen geneigten Oberseite und diesem geringfügigen Überstehen des Außenrands kann zum einen ein besonders sicheres Greifen und Berühren des Bedienelements gewährleistet werden. Zum anderen kann dadurch vermieden werden, dass mit dem Finger nicht ungewollt zu sehr an der Außenseite der Abdeckung mit dem Finger entlanggestreift wird. Dadurch können unerwünschte Verschmutzungen dieser Außenseite einerseits und ein ungewolltes Abrutschen des Fingers von der Oberseite des ringförmigen Vorderteils des Bedienelements vermieden werden. Die Bewegungsführung ist durch diese Ausgestaltung des Bedienelements besonders begünstigt und nutzerfreundlich.

Nicht zuletzt darf in diesem Zusammenhang erwähnt werden, dass durch diese Einbettung des Vorderteils und diesen minimalen Überstand nur des äußeren Rands dieses ringförmigen Vorderteils auch im Hinblick auf den Aufbau der Bedienvorrichtung bzw. dessen Bauraumtiefe besonders minimiert ist.

Das als Ring ausgebildete Bedienelement ist in einer Nut in der Vorderseite der Abdeckung angeordnet. Dies bedeutet, dass insbesondere das ringförmige Vorderteil und der Gleitring in dieser frontseitigen Nut angeordnet sind. Auch dadurch kann deren Positionierung mechanisch begünstigt werden und gerade im Hinblick auf die relative Drehbewegung besonders gut geführt werden.

Ein Teilbereich der Außenseite der Abdeckung ist von dem Vorderteil umschlossen.

Mit einem elektronischen Anzeigefeld wird insbesondere ein Display verstanden, auf dem Informationen dynamisch wechselnd anzeigbar sind. Dies können Informationen umfassend Buchstaben und/oder Zahlen und/oder Symbole sein.

Das Bedienelement weist ein ringförmiges Vorderteil auf, welches eine nach innen geneigte Oberseite aufweist. Dieses Vorderteil ist relativ zum Anzeigefeld bewegbar. Die Berührbarkeit und Drehbewegungsführung durch einen Finger eines Nutzers ist dadurch besonders sicher und präzise möglich.

Vorzugsweise ist das Bedienelement grundsätzlich als Ring ausgebildet. Eine Form als voller Zylinder oder dergleichen ist daher nicht mehr vorgesehen. Zum Einen kann dadurch Material eingespart werden und zwar im Hinblick auf das grundsätzliche Bedienprinzip kann dies dahingehend gestaltet werden, dass der im Vergleich zum Stand der Technik an seiner Mantelseite zu greifende Zylinder des Bedienknebels hier nicht mehr vorliegt, sondern gerade die Vorderseite bzw. Oberseite dieses ringförmigen Vorderteils durch einen Nutzer berührt wird und dann dieses Vorderteil gedreht wird. Es wird somit quasi prinzipiell eine andere Fläche zur Berührung durch den Nutzer und der damit dann verbundenen Bewegung des Bedienelements vorgesehen. Durch die Ringform ergibt sich diesbezüglich eine sehr geeignete Form dahingehend, dass ein Bedienelement bereitgestellt wird, welches einen relativ großen Durchmesser hat. Dieser kann größer sein als herkömmliche zylinderförmige Bedienknebel. Gerade durch die ringförmige Ausgestaltung des Vorderteils und die vorgesehene Berührung an der Oberseite kann dann auch das erfindungsgemäße Bedienelement sehr exakt in eine gewünschte Drehstellung zur Einstellung von gewünschten Betriebsbedingungen gebracht werden. Derartiges ist mit herkömmlichen zylinderförmigen Bedienelementen nicht möglich. Denn zum Einen ist die diesbezügliche Drehbarkeit bei Berührung lediglich an der Vorderseite dieses Hohlzylinders schwierig und mechanisch mit größerer Kraft verbunden und bewirkt darüber hinaus keine Leichtgängigkeit und bedingt Fehleinstellungen. Diesbezüglich sind die herkömmlichen zylinderförmigen Bedienknebel so konzipiert, dass sie mit ihrem Durchmesser kleiner ausgestaltet sind, sodass die Vorderseite derartiger zylinderförmiger Bedienknebel auch relativ klein ist und im Hinblick auf die Berührung mit einem Finger aufgrund der Kraftpfade dann auch nur sehr schwer oder gar nicht gedreht werden können.

Vorzugsweise ist das Bedienelement als Drehwähler ausgebildet. Dies bedeutet, dass durch Einstellen verschiedener Drehstellungen die dann zugeordneten und gewünschten Betriebsbedingungen ausgewählt und/oder eingestellt werden können.

Unter der Einstellung von Betriebsbedingungen ist allgemein sowohl die Auswahl von Funktionsteileinheiten eines Hausgeräts als auch das Einstellen von Werten von Betriebsparametern dieser Funktionsteileinheiten umfasst. Beispielsweise kann bei einem Backofen als Funktionsteileinheit der Betrieb des Garraums oder einer Kochzone vorgesehen sein. Darüber hinaus kann eine Einstellung eines Betriebsparameters, beispielsweise der Temperatur, der Kochzone oder des Garraums entsprechend durchgeführt werden.

Vorzugsweise ist vorgesehen, dass das Bedienelement mehrteilig ausgebildet ist und unter dem ringförmigen Vorderteil ein Gleitring angeordnet ist. Das ringförmige Vorderteil sitzt somit insbesondere berührend auf dem Gleitring auf. Der Gleitring ist aus einem spezifischen Material gefertigt, welches die Bewegbarkeit des ringförmigen Vorderteils mit möglichst wenig Reibung begünstigt. Dadurch ist eine besonders leichtgängige und nutzerfreundliche Drehung des Vorderteils möglich. Im Hinblick auf die Materialausgestaltung des Gleitrings können herkömmliche und bekannte Polymermaterialien vorgesehen sein, die besonders geringe Reibung aufweisen.

Vorzugsweise ist vorgesehen, dass das als Ring ausgebildete Bedienelement Magnete aufweist, wobei in Wechselwirkung der Magnete mit feststehenden Metallelementen, insbesondere einer ringförmigen Metallspinne, abhängig von einer Relativbewegung des Rings, insbesondere des ringförmigen Vorderteils, zu den Metallelementen eine zugeordnete Betriebseinstellung des Hausgeräts erfassbar ist. Die Magnete können vorzugsweise auf der Rückseite des Vorderteils angebracht bzw. darin eingebettet sein. Die Drehstellung dieses Vorderteils relativ zu den Metallelementen, insbesondere der ringförmigen Metallspinne, kann somit aufgrund dieser Wechselwirkung detektiert und durch eine Steuereinheit der Bedienvorrichtung ausgewertet werden.

Besonders vorteilhaft ist vorgesehen, dass die Metallelemente an der Rückseite einer das Anzeigefeld zumindest bereichsweise frontseitig bedeckenden Abdeckung angeordnet sind.

Im Hinblick auf die Metallspinnen, die vorzugsweise einstückig ausgebildet sind, ist der Durchmesser vorzugsweise im Wesentlichen entsprechend dem Durchmesser des Gleitrings und/oder des ringförmigen Vorderteils.

Die Metallspinne weist vorzugsweise eine Dicke kleiner 1 mm, vorzugsweise 0,7 mm auf. Sie ist vorzugsweise in einer Vertiefung an der Rückseite der Abdeckung eingebettet bzw. angeordnet. Die flachbauende Ausgestaltung der Bedienvorrichtung wird dadurch begünstigt. Zum anderen ist die Metallspinne dadurch positionssicher und mechanisch stabil gehalten.

Vorzugsweise ist vorgesehen, dass der Gleitring mit dem ringförmigen Vorderteil fest verbunden ist und bei der Drehbewegung des Vorderteils der Gleitring die gleiche Drehbewegung vollzieht.

In diesem Zusammenhang kann auch vorgesehen sein, dass die oben genannten Magnete in dem Gleitring angeordnet sind.

Vorzugsweise ist vorgesehen, dass das als Ring ausgebildete Bedienelement zumindest bereichsweise für Licht im für den Menschen sichtbaren Spektralbereich durchlässig ausgebildet ist. Durch eine derartige Ausgestaltung können zusätzliche optische Informationen an einen Nutzer weitergegeben werden. Neben der Kenntlichmachung des Bedienelements für einen Nutzer im Hinblick auf die generelle Position des Bedienelements in der Bedienvorrichtung kann dadurch auch darüber hinaus eine Betriebsbedingung individuell optisch angezeigt werden. Es kann vorgesehen sein, dass das ringförmige Vorderteil vollständig hinterleuchtbar ist, oder dass nur Ringabschnitte entsprechend hinterleuchtbar sind.

Vorzugsweise ist vorgesehen, dass das Bedienelement in einer vor dem Anzeigefeld angeordneten plattenförmigen, insbesondere für das Licht des Anzeigefelds durchlässigen, Abdeckung eingebettet ist. Diese Abdeckung ist daher mulifunktionell, da sie zum Einen als Träger für das Bedienelement fungiert und dieses Bedienelement bauraumminimiert aufnimmt. Zum Anderen dient es als Schutz für das Anzeigefeld, sodass dieses vor Verschleiß oder Beschädigung geschützt wird. Durch die lichtdurchlässige Ausgestaltung kann auch hier im Hinblick auf die Flächenausmaße eine besonders bauraumminimierte Anordnung bereitgestellt werden.

Vorzugsweise ist vorgesehen, dass auf der Außenseite bzw. Vorderseite dieser Abdeckung eine Nut ausgebildet ist, in der der Gleitring und das ringförmige Vorderteil versenkt angeordnet sind. Vorzugsweise deckungsgleich ist auf der Rückseite dieser Abdeckung eine Nut ausgebildet, in der die Metallspinne positioniert ist. Insbesondere kann bei einer ersten Ausführung vorgesehen sein, dass zwischen den beiden Nuten und somit auch zwischen der Metallspinne und dem Gleitring noch Material der Abdeckung dazwischen ist.

In einer alternativen Ausführung kann vorgesehen sein, dass die Abdeckung eine vollständig durchgängige Aussparung aufweist. In diese Lochaussparung können dann die genannten Bauteile des Bedienelements eingebracht werden und es kann eine hintere Abdeckung, beispielsweise ein Blech oder ein Kunststoffteil vorgesehen sein, welches die Konstruktion von hinten dann verschließt. Ebenso kann vorgesehen sein, dass ein weiteres entsprechendes Glasteil dann in dieses Loch eingebracht und befestigt wird, wobei dann darin die genannten Bauteile des Bedienelements angeordnet sind.

Neben der bereits genannten mehrteiligen Ausgestaltung des Bedienelements kann jedoch auch eine einstückige bzw. einteilige Ausführung vorgesehen sein.

Auch hier kann eine bereits oben angesprochene Möglichkeit der Hinterleuchtung vorgesehen sein, wobei dann in dem Ring entsprechende dünnere Ringe oder Ringabschnitte, Punkte oder Segmente optisch anzeigbar wären. Dadurch können Hinweise auf eine Einstellung eines Betriebs oder den Ablauf eines Programms des Geräts gegeben werden. Dies könnte auch innerhalb oder außerhalb des Rings oder digital im Anzeigefeld angezeigt werden bzw. optisch dargestellt werden.

Die Befestigung der Komponenten des Bedienelements, insbesondere die ringförmigen Bauteile können beispielsweise über Haltemagnete gehalten werden.

Vorzugsweise ist vorgesehen, dass die Abdeckung eine Glasplatte ist. Diese weist insbesondere eine Dicke kleiner 10 mm, insbesondere kleiner 8 mm, vorzugsweise zwischen 6 mm und 4 mm auf. Durch diese Dicke wird einerseits die ausreichende mechanische Stabilität für die Einbettung der Komponenten des Bedienelements geschaffen, andererseits eine dennoch so dünne Ausgestaltung ermöglicht, dass zum Einen eine gute Durchlässigkeit der optischen Signale des Anzeigefeldes ermöglicht ist und die Bautiefe der Abdeckung minimiert ist.

Vorzugsweise ist vorgesehen, dass die Oberseite des ringförmigen Vorderteils des Bedienelements aus Metall ist. Es kann hier beispielsweise eine Metallschicht aufgebracht sein. Es kann jedoch auch vorgesehen sein, dass das Vorderteil vollständig aus Metall ist. Bei einer Ausgestaltung mit einer metallischen Oberseite wird einerseits ein hochwertiger Eindruck vermittelt, andererseits geringer Verschleiß gewährleistet.

Vorzugsweise ist vorgesehen, dass das bewegbare Bedienelement zumindest bereichsweise innerhalb des Flächenbereichs des elektronischen Anzeigefelds angeordnet ist. Die freie Bewegbarkeit des Bedienelements einerseits und die dennoch multiple und digitale bzw. dynamisch wechselnde Anzeige von Informationen auf dem elektronischen Anzeigefeld sehr nah benachbart zu dem Bedienelement kann dadurch erreicht werden.

Mit der Angabe, dass sich das Bedienelement innerhalb des Flächenbereichs des Anzeigefelds befindet, ist umfasst, dass bei frontseitiger Betrachtung der Bedienvorrichtung die Flächenausdehnung des Bedienelements in die Flächenausdehnung des Anzeigefelds hineinragt. Das Bedienelement kann dabei vor dem Anzeigefeld angeordnet sein oder in das Anzeigefeld integriert sein. Es kann auch vorgesehen sein, dass die Formgebung des Anzeigefelds an dem dem Bedienelement zugewandten Bereich an die Kontur des Bedienelements angepasst ist und die Randbereiche des Anzeigefelds und des Bedienelements an dem aneinander angrenzenden Bereich direkt aneinander angrenzen. Auch dies ist von einem innerhalb angeordnet sein umfasst. Ist beispielsweise das Anzeigefeld eckig, insbesondere rechteckig, und das Bedienelement mit der Randkontur kreisförmig ausgebildet, so kann vorgesehen sein, dass das Anzeigefeld an der Stelle, an der sich das Bedienelement befindet, einen kreissegmentartige Aussparung umfasst, in die das Bedienelement sich hinein erstreckt.

Vorzugsweise ist vorgesehen, dass an zumindest einem Feldbereich des Anzeigefelds die anzuzeigende Information abhängig von der Bewegung des Bedienelements veränderbar ist. So können in diesem Zusammenhang unterschiedliche Menüoberflächen auf dem elektronischen Anzeigefeld dargestellt werden. Die Menüoberflächen können abhängig von der Drehstellung des Bedienelements angewählt und ausgewählt werden. Es kann auch vorgesehen sein, dass dann die grundsätzlich angezeigten Menüoberflächen mit weiteren Menüinhalten bei einer Anwahl durch eine spezifische Drehstellung des Bedienelements angezeigt werden.

Vorzugsweise ist vorgesehen, dass eine anzuzeigende Menüoberfläche auf dem Anzeigefeld um das Bedienelement herum anzeigbar ist bzw. angezeigt ist. Weist das Bedienelement eine kreisförmige Randkontur auf, so kann vorgesehen sein, dass durch das Bedienelement anwählbare Menüstellen in einem Ringabschnitt auf dem Anzeigefeld um das Bedienelement angrenzend an das Bedienelement angeordnet sind.

Des Weiteren betrifft die Erfindung ein Hausgerät mit einer erfindungsgemäßen Bedienvorrichtung oder einer vorteilhaften Ausgestaltung davon. Das Hausgerät ist insbesondere zur Zubereitung von Lebensmitteln oder zur Pflege von Wäschestücken oder zur Reinigung von Geschirr ausgebildet. Beispielhafte Hausgeräte können in diesem Zusammenhang ein Backofen, eine Waschmaschine, ein Wäschetrockner, ein Geschirrspüler, ein Kühlschrank, eine Gefriertruhe oder dergleichen sein.

Ausführungsbeispiele der Erfindung werden nachfolgend anhand schematischer Zeichnungen näher erläutert. Es zeigen:
- Fig. 1: eine schematische perspektivische Darstellung eines Ausführungsbeispiels eines erfindungsgemäßen Hausgeräts;
- Fig. 2: eine schematische Frontansicht eines Ausführungsbeispiels einer erfindungsgemäßen Bedienvorrichtung;
- Fig. 3: eine Schnittdarstellung durch Teilkomponenten der Bedienvorrichtung gemäß der Darstellung in Fig. 2;
- Fig. 4: eine Explosionsdarstellung der Abbildung in Fig. 3; und
- Fig. 5: eine schematische Frontansicht eines Ausführungsbeispiels einer erfindungsgemäßen Bedienvorrichtung.

In den Figuren werden gleiche oder funktionsgleiche Elemente mit den gleichen Bezugszeichen versehen.

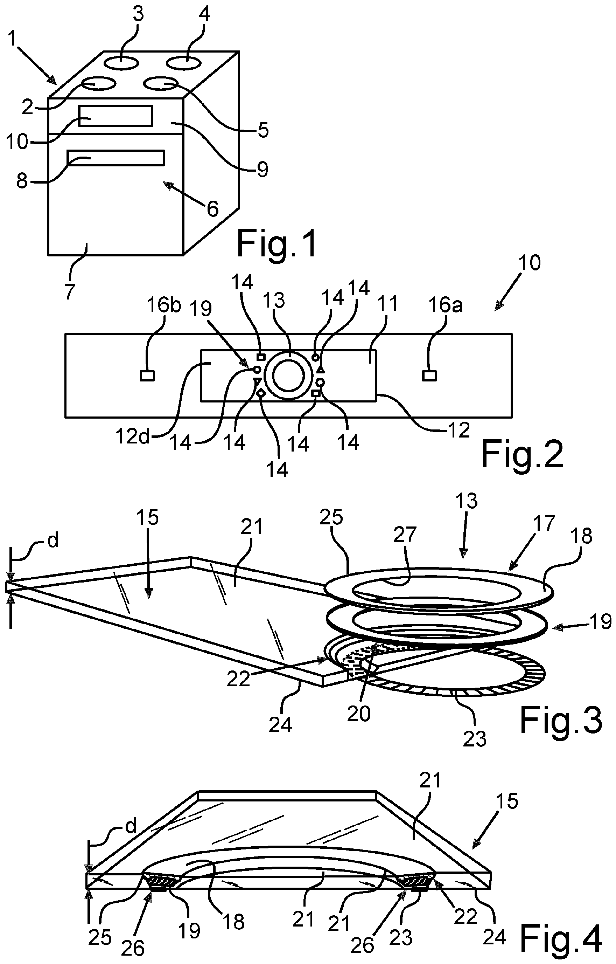

In Fig. 1 ist in vereinfachter schematischer Darstellung ein als Backofen 1 ausgebildetes Hausgerät dargestellt. Der Backofen 1 umfasst vier Kochzonen 2, 3, 4 und 5 und einen Garraum 6, der durch eine Tür 7, die an der Außenseite einen Griff 8 aufweist, verschließbar ist. Im Ausführungsbeispiel oberhalb der Tür 7 angeordnet ist eine Bedienblende 9 mit einer Bedienvorrichtung 10. Sowohl die Position als auch die Ausgestaltung der Bedienblende 9 ist lediglich beispielhaft.

In Fig. 2 ist in vereinfachter Darstellung eine Frontansicht eines Ausführungsbeispiels der Bedienvorrichtung 10 gezeigt. Die Bedienvorrichtung 10 umfasst ein elektronisches Anzeigefeld 11, welches als Display ausgebildet ist. Auf dem Anzeigefeld 11, welches flächenmäßig durch den Rand bzw. die Begrenzung 12 begrenzt ist, die im Ausführungsbeispiel rechteckig ausgestaltet ist, können Informationen dynamisch veränderbar angezeigt werden. Auf einem derartigen Bildschirm können unterschiedliche Informationen in Form von Buchstaben und/oder Zahlen und/oder Symbolen angezeigt werden.

Die Bedienvorrichtung 10 umfasst darüber hinaus ein Bedienelement 13, welches im Ausführungsbeispiel ein Drehwähler ist. Wie aus der Darstellung in Fig. 2 zu erkennen ist, ist der Drehwähler 13 mit seinen von vorne betrachteten in die Figurenebene projizierten Flächenausmaßen vollständig innerhalb der Fläche 12d mit der Begrenzung 12 des elektronischen Anzeigefelds 11 angeordnet. Er ist somit quasi in die flächigen Ausmaße des Anzeigefelds 11 vollständig eingebettet positioniert. Das Bedienelement 13 ist aufgrund seiner Ausgestaltung als Drehwähler relativ zum Anzeigefeld 11 bewegbar. Durch Drehen des Bedienelements 13 werden die damit verbundenen Betriebsbedingungen des Backofens 1 eingestellt. Wie zu erkennen ist, ist benachbart und zumindest in Ringabschnitten um das ringförmige Bedienelement 13 herum eine Informationsdarstellung ausgebildet, die in Fig. 2 in Form von Symbolen 14 erfolgt. Die Symbole 14 sind in ihrer Anzahl lediglich beispielhaft angegeben. Es kann auch vorgesehen sein, dass anstatt der Symbole 14 Zahlen und/oder Buchstaben angezeigt sind. Die Informationen um das ringförmige Bedienelement 13 herum stellen in alternativer Ausführung beispielsweise auch Menüoberflächen dar, die dann eine gewisse Ordnerstruktur definieren. Die dann angezeigten Informationen können beispielsweise einen Begriff für einen Ordner, in dem dann weitere Informationen enthalten sind, darstellen. Wird dann ein derartiger Ordner durch Anwählen in Gestaltung des Drehens des Bedienelements 13 ausgewählt, kann der Menüinhalt weiter detaillierter angezeigt werden.

Wie im Ausführungsbeispiel gemäß Fig. 2 zu erkennen ist, sind außerhalb der Fläche 12d mit der Begrenzung 12 des Anzeigefelds 11 zwei Bedienteile 16a und 16b ausgebildet. Diese Bedienteile 16a und 16b sind im Ausführungsbeispiel als berührsensitive Bedienfelder ausgebildet. Sie können einerseits beispielsweise ein Ein- und Ausschalten des Backofens 1 funktionell umfassen. Zusätzlich oder anstatt dazu kann auch vorgesehen sein, dass zumindest eines der Bedienteile 16a oder 16b zur Einstellung einer Informationstiefe eines auf dem Anzeigefeld 11 anzuzeigenden Menüinhalts ausgebildet ist. Dies bedeutet, dass die Informationen, wie sie in Fig. 2 als Symbole 14 oder als Menüoberbegriffe einer Menüoberfläche dargestellt sind, durch eines der Bedienteile 16a oder 16b veränderbar sind. Gegebenenfalls kann damit eingestellt werden, dass ein anzuzeigender Begriff für einen Ordner nicht der übergeordnete Gesamtordner ist, sondern bereits eine tiefere Ordnerstruktur darstellt und beispielsweise als Grundeinstellung ein Unterordner angezeigt ist.

Es kann auch vorgesehen sein, dass das Bedienteil 16a und/oder 16b innerhalb der Fläche 12d mit der Begrenzung 12 des Anzeigefelds 11 angeordnet ist.

In Fig. 3 ist in einer perspektivischen Darstellung die in Fig. 2 angedeutete Abdeckung 15 in Form einer Glasplatte teilweise gezeigt. Die Abdeckung 15 ist im Bereich des Bedienelements 13 geschnitten gezeigt. Das Bedienelement 13 ist in Explosionsdarstellung gezeigt. Wie zu erkennen ist, ist das Bedienelement 13 mehrteilig aufgebaut, es umfasst ein ringförmiges Vorderteil 17, welches eine Frontseite bzw. Oberseite 18 aufweist. Die Oberseite 18 ist schräg geneigt nach innen, sodass die Oberseite 18 quasi eine Trichterform des Vorderteils 17 ergibt. Die Schrägneigung nach innen ist vorzugsweise zwischen 3° und 15° gegenüber der Ebene, in der sich das ringförmige Vorderteil 17 erstreckt. Im Ausführungsbeispiel ist das Vorderteil 17 einstückig als Aluminiumbauteil ausgebildet.

Das Bedienelement 13 umfasst darüber hinaus einen Gleitring 19, der unter dem Vorderteil 17 angeordnet ist. Er ist ebenfalls einstückig ausgebildet und aus einem besonders reibungsarmen Material hergestellt. Er ist vorzugsweise drehfest mit dem Vorderteil 17 verbunden. Im Ausführungsbeispiel ist vorgesehen, dass an und/oder in dem Gleitring 19 mehrere Magnete 20 angeordnet sind. Mittels diesen Magneten ist der Gleitring 19 und das Vorderteil 17 in einer in der Außenseite 21 der Abdeckung 15 ausgebildeten Ringnut 22 gehalten.

Darüber hinaus wird durch diese Magnete 20, die beispielsweise auch in Mehrzahl äquidistant in Umlaufrichtung des Gleitrings 19 an diesem angeordnet sein können, die Drehstellung relativ zu einer Metallspinne 23 erfasst. Die Metallspinne 23 ist gemäß der Darstellung in Fig. 3 ebenfalls als Ring ausgebildet, der eine Dicke von etwa 0,7 mm aufweist.

Vorzugsweise ist vorgesehen, dass auf einer Rückseite 24 der Abdeckung 15 ebenfalls eine Ringnut ausgebildet ist, in der die Metallspinne 23 angeordnet ist. Im Hinblick auf die Begrifflichkeit Metallspinne wird dabei die Ringform mit den spinnenartigen bzw. zackenartigen Erhebungen und/oder radialen Erstreckungen umfasst.

Zwischen der Nut 22 und der auf der Rückseite 24 ausgebildeten Nut 26 (Fig. 4) für die Metallspinne 23 ist weiterhin Material der Abdeckung 15 und somit Glasmaterial vorhanden, sodass diesbezüglich kein durchgängiges Loch bzw. keine durchgängige Aussparung ausgebildet ist.

Die Dicke D der Abdeckung 15, welche insbesondere eine rechteckige Glasplatte darstellt, beträgt im Ausführungsbeispiel 4 mm.

Es kann auch vorgesehen sein, dass das Vorderteil 17 und der Gleitring 19 zumindest bereichsweise für Licht im für den Menschen sichtbaren Spektralbereich durchlässig ausgebildet ist. Dadurch können Hinterleuchtungen von zumindest Ringabschnitten des Vorderteils 17 und des Gleitrings 19 erfolgen.

Mittels einer nicht gezeigten Steuereinheit kann die Drehstellung des Gleitrings 19 und des Vorderteils 17 relativ zur Metallspinne 23 detektiert werden und da durch die spezifische Drehstellung und somit die relative Stellung zur Abdeckung 15 und somit auch zum Anzeigefeld 11 erfasst und die zugeordnete Betriebsbedingungseinstellung erkannt und durchgeführt werden.

In Fig. 4 ist die Darstellung in Fig. 3 in zusammengesetzten Zustand gezeigt. Es ist dabei zu erkennen, dass ein Außenrand 25 des ringförmigen Vorderteils 17 gegenüber der Außenseite 21 etwa 0.5 mm übersteht. Die schräg nach innen und unten verlaufende Oberseite 18 ist ebenfalls zu erkennen. Darüber hinaus ist auch die Nut 26 für die Metallspinne 23 gezeigt. Im Hinblick auf den Innenrand 27 des ringförmigen Vorderteils 17 kann dieser bündig mit der Außenseite 21 sein. Aufgrund der nach innen schräg nach unten verlaufenden Oberseite 18 ist dann vorgesehen, dass dieser von dem Bedienelement 13 umschlossene Teilbereich der Außenseite 21 nach unten versetzt gegenüber dem außerhalb des ringförmigen Vorderteils 17 ausgebildeten Bereich der Außenseite 21 ist. Es kann jedoch auch vorgesehen sein, dass dieser Innenrand 27 ebenfalls leicht überstehend gegenüber diesem von dem Vorderteil 17 umschlossenen Teilbereich der Außenseite 21 angeordnet ist. Die Abdeckung 15 ist zumindest bereichsweise vor dem elektronischen Anzeigefeld 11 angeordnet und für die optischen Signale und Informationen des Anzeigefelds 11 durchlässig.

Vorzugsweise ist der von dem ringförmigen Bedienelement 13 umschlossene Teilbereich der Außenseite 21 auch als Anzeigebereich des Anzeigefelds 11 ausgebildet.

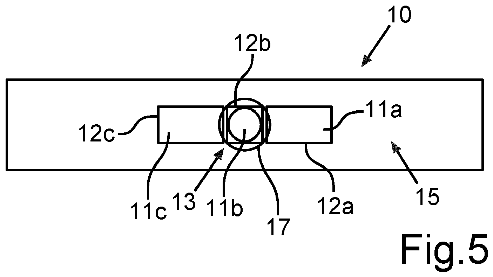

In Fig. 5 ist in einer weiteren schematischen Frontansicht eine Bedienvorrichtung 10 gezeigt. Im Unterschied zur Ausgestaltung gemäß Fig. 2 ist hier vorgesehen, dass eine Mehrzahl von elektronischen Anzeigefeldern 11a, 11b und 11c vorgesehen ist. Diese sind als separate Anzeigefelder ausgebildet und beabstandet zueinander angeordnet. Dies bedeutet, dass ihre Konturen bzw. Flächenbegrenzungen 12a, 12b und 12c sich nicht überlappen bzw. mit einem gewissen Abstand zueinander angeordnet sind. Dennoch ist die Beabstandung der Anzeigefelder 11a, 11b und 11c so bemessen, dass das Bedienelement 13 sich zumindest bereichsweise jeweils in jeden Flächenbereich, der durch die Begrenzungen 12a, 12b und 12c begrenzt ist, hineinerstreckt. Wie zu erkennen ist, überlappt dabei die Fläche des ringförmigen Vorderteils 17 bereichsweise die Fläche, die durch die Begrenzung 12a, bereichsweise die Fläche, die durch die Begrenzung 12b und bereichsweise die Fläche, die durch die Begrenzung 12c begrenzt ist.

Es ist vorgesehen, dass die Abdeckung 15 eine einstückige Glasplatte ist, die frontseitig alle drei Anzeigefelder 11a, 11b und 11c bedeckt. Bei frontseitiger Betrachtung der Bedienvorrichtung 10 ist somit vorzugsweise nicht zu erkennen, dass sich dahinter drei separate Anzeigefelder 11a, 11b und 11c befinden. Insbesondere kann dies dadurch erreicht werden, dass die Abdeckung 15 beispielsweise farblich leicht eingefärbt ist, dennoch uneingeschränkt für die optischen Signale der Anzeigefelder 11a, 11b und 11c durchlässig ist.

Durch die Bedienvorrichtung 10 gemäß der Erfindung bzw. einer Ausführung davon kann die Bereitstellung eines in die Gerätefront weitestgehend integrierten, in jeder Lage jedoch einfach drehbaren Bedienelements zur einfachen Werteeinstellung bzw. Funktionsauswahl erreicht werden. Die Kombination zwischen einem manuell bewegbaren Bedienelement zur Einstellung dieser Werte oder zur Auswahl von Funktionen einerseits mit einer elektronischen Anzeigeeinheit ist dadurch im Hinblick auf Funktionalität, Bauraumminimierung und nutzerfreundlicher Bedienung viel übersichtlicher und örtlich gebündelter Bedienung und Informationsanzeige gewährleistet. Es kann ein direkter Lagebezug zwischen den jeweiligen Bedienelementen, insbesondere eines Drehwählers, mit einer im Umkreis darum angeordneten elektronischen Anzeige von Informationen äußerst kompakt und dicht nebeneinander erzielt werden.

Neben der bereits zu den Fig. 3 und 4 weiteren spezifischen Ausführungen, bei denen die Oberseite 18 schräg nach innen und unten geneigt angeordnet ist und somit im Querschnitt das Vorderteil 17 an seiner Oberseite 18 trichterförmig ausgebildet ist, kann auch vorgesehen sein, dass diese Oberseite 18 keine derartige Schrägneigung aufweist, sondern sich quasi in einer Ebene erstreckt. Die Oberseite 18 ist dann mit ihrer gesamten Fläche auf einem Niveau angeordnet, welches sich über das Niveau der Außenseite 21 der Abdeckung 15 erhaben erstreckt.

Die Abdeckung 15 kann in vielfältiger Ausgestaltung realisiert sein und kann neben der beispielhaften Ausführung als Glasplatte jedoch in jeder anderen Ausführung als Bedienblende und frontseitiger Abschluss des Anzeigefelds 11, bzw. der Anzeigefelder 11a, 11b und 11c ausgeführt sein. Die Abdeckung kann neben der Ausgestaltung als Glasplatte beispielsweise auch als optische Filterplatte ausgebildet sein. Es können darüber hinaus auch hinterleuchtete Anzeigefolien hinter der Abdeckung angeordnet sein.

Ebenso kann vorgesehen sein, dass das Bedienelement als kreisförmiger Touchslider und somit als berührsensitives Bedienelement ausgebildet ist, bei dem zur Betriebsbedingungseinstellung ein Nutzer mit einem Finger nicht nur punktuell auf das berührsensitive Feld drücken muss, sondern zusätzlich auch eine Bewegung auf diesem berührsensitiven Feld durchführen muss, um die damit verbundene Betriebseinstellung starten oder durchführen zu können. Bei einer derartigen Ausgestaltung liegt jedoch dann kein Bedienelement vor, welches mechanisch relativ zu dem Anzeigefeld bewegbar ist, um Betriebsbedingungen einstellen zu können.

### Bezugszeichenliste

- 1: Hausgerät
- 2: Kochzone
- 3: Kochzone
- 4: Kochzone
- 5: Kochzone
- 6: Garraum
- 7: Tür
- 8: Griff
- 9: Bedienblende
- 10: Bedienvorrichtung
- 11, 11a bis 11c: Anzeigefelder
- 12, 12a bis 12c: Begrenzungen
- 12d: Flächenbereich
- 13: Bedienelement
- 14: Symbole
- 15: Abdeckung
- 16a, 16b: Bedienteile
- 17: Vorderteil
- 18: Oberseite
- 19: Gleitring
- 20: Magnete
- 21: Außenseite
- 22: Nut
- 23: Metallspinne
- 24: Rückseite
- 25: Außenrand
- 26: Nut
- 27: Innenrand

## Patentansprüche

1. Bedienvorrichtung für ein Hausgerät (1), welche ein elektronisches Anzeigefeld (11, 11a bis 11c) umfasst, und ein Bedienelement (13), welches zur Einstellung von Betriebsbedingungen des Hausgeräts (1) relativ zum Anzeigefeld (11, 11a bis 11c) bewegbar ist, wobei das Bedienelement (13) bereichsweise in eine Abdeckung (15) des zumindest einen elektronischen Anzeigefelds (11, 11a bis 11c) eingebettet ist, und ein ringförmiges Vorderteil (17) des Bedienelements (13) mit seiner Oberseite (18) bereichsweise erhaben über das Niveau einer Außenseite (21) der Abdeckung (15) übersteht, wobei die Oberseite (18) des ringförmigen Vorderteils (17) trichterförmig ist und das Vorderteil (17) mit seinem Außenrand (25) über die Außenseite (21) der Abdeckung (15) erhaben übersteht, **dadurch gekennzeichnet, dass** die Teilkomponenten (17, 19) des als Ring ausgebildeten Bedienelements (13) in einer Nut (22) in der Außenseite (21) der Abdeckung (15) angeordnet sind, und wobei ein Teilbereich der Außenseite (21) der Abdeckung (15) von dem Vorderteil (17) umschlossen ist.

2. Bedienvorrichtung nach Anspruch 1, **dadurch gekennzeichnet, dass** das Bedienelement (13) als Drehwähler ausgebildet ist und das Vorderteil (17) relativ zur Abdeckung (15) drehbar ist.

3. Bedienvorrichtung nach Anspruch 1 oder 2, **dadurch gekennzeichnet, dass** das Bedienelement (13) mehrteilig ausgebildet ist und unter dem Vorderteil (17) ein Gleitring (19) angeordnet ist.

4. Bedienvorrichtung nach einem der vorhergehenden Ansprüche, **dadurch gekennzeichnet, dass** das als Ring ausgebildete Bedienelement (13) Magnete (20) aufweist, wobei in Wechselwirkung der Magnete (20) mit feststehenden Metallelementen, insbesondere einer ringförmigen Metallspinne (23), abhängig von einer Relativbewegung des Bedienelements (13) zu den Metallelementen eine zugeordnete Betriebseinstellung des Hausgeräts (1) erfassbar ist.

5. Bedienvorrichtung nach Anspruch 4, **dadurch gekennzeichnet, dass** die Metallelemente (23) an der Rückseite (24), insbesondere einer Nut (26) auf der Rückseite (24), der Abdeckung (15) angeordnet sind.

6. Bedienvorrichtung nach einem der vorhergehenden Ansprüche, **dadurch gekennzeichnet, dass** die Abdeckung (15) für das Licht des Anzeigefelds (11, 11a bis 11c) durchlässig ist.

7. Bedienvorrichtung nach einem der vorhergehenden Ansprüche, **dadurch gekennzeichnet, dass** die Oberseite (18) schräg nach innen und unten verlaufend ausgebildet ist.

8. Bedienvorrichtung nach einem der vorhergehenden Ansprüche, **dadurch gekennzeichnet, dass** das Vorderteil (17) mit seinem Außenrand (25) über die Außenseite (21) der Abdeckung (15) kleiner 1,5 mm erhaben übersteht.

9. Bedienvorrichtung nach einem der vorhergehenden Ansprüche, **dadurch gekennzeichnet, dass** die Abdeckung (15) eine Glasplatte ist, insbesondere eine Dicke (d) kleiner 10 mm, insbesondere zwischen 6 mm und 4 mm, aufweist.

10. Bedienvorrichtung nach einem der vorhergehenden Ansprüche, **dadurch gekennzeichnet, dass** das Bedienelement (13) zumindest bereichsweise innerhalb dem Flächenbereich (12d) zumindest eines elektronischen Anzeigefelds (11, 11a bis 11c) angeordnet ist.

11. Bedienvorrichtung nach Anspruch 10, **dadurch gekennzeichnet, dass** das Bedienelement (13) zumindest bereichsweise innerhalb der Flächenbereiche von zumindest zwei separaten und benachbart zueinander angeordneten elektronischen Anzeigefeldern (11a bis 11c) angeordnet ist, insbesondere eine Abdeckung (15) beide Anzeigefelder (11a bis 11c) jeweils zumindest bereichsweise frontseitig abdeckt.

12. Bedienvorrichtung nach einem der vorhergehenden Ansprüche, **dadurch gekennzeichnet, dass** an zumindest einem Feldbereich eines Anzeigefelds (11, 11a bis 11c) die anzuzeigende Information abhängig von der Bewegung des Bedienelements (13) veränderbar ist.

13. Bedienvorrichtung nach einem der vorhergehenden Ansprüche, **dadurch gekennzeichnet, dass** eine anzuzeigende Menüoberfläche (14) mit zumindest zwei anwählbaren Menüstellen auf einem Anzeigefeld (11, 11a bis 11c) um das Bedienelement (13) herum anzeigbar ist, insbesondere in einem Ringabschnitt, der an den Rand des Bedienelements (13) angrenzt, anzeigbar ist.

14. Hausgerät mit einer Bedienvorrichtung (10) nach einem der vorhergehenden Ansprüche.

## Claims

1. Operator control device for a household appliance (1), having an electronic display panel (11, 11a to 11c), and an operator control element (13) which can be moved relative to the display panel (11, 11a to 11c) to set operating conditions of the household appliance (1), wherein some areas of the operator control element (13) are embedded in a cover (15) of the at least one electronic display panel (11, 11a to 11c), and some areas of the upper face (18) of an annular front part (17) of the operator control element (13) project above the level of an outer face (21) of the cover (15), wherein the upper face (18) of the annular front part (17) is funnel-shaped and the outer edge (25) of the front part (17) projects above the outer face (21) of the cover (15), **characterised in that** the subcomponents (17, 19) of the operator control element (13) implemented as a ring are disposed in a groove (22) in the outer face (21) of the cover (15), and wherein a partial area of the outer face (21) of the cover (15) is enclosed by the front part (17).

2. Operator control device according to claim 1, **characterised in that** the operator control element (13) is implemented as a rotary selector and the front part (17) can be rotated relative to the cover (15).

3. Operator control device according to claim 1 or 2, **characterised in that** the operator control element (13) is of multi-part design and a sliding ring (19) is disposed below the front part (17).

4. Operator control device according to one of the preceding claims, **characterised in that** the operator control element (13) implemented as a ring has magnets (20), wherein, by the interaction of the magnets (20) with fixed metal elements, in particular with an annular metal spider (23), an assigned operating setting of the household appliance (1) can be detected as a function of a relative movement of the operator control element (13) with respect to the metal elements.

5. Operator control device according to claim 4, **characterised in that** the metal elements (23) are disposed on the back (24), in particular in a groove (26) on the back (24), of the cover (15).

6. Operator control device according to one of the preceding claims, **characterised in that** the cover (15) is permeable to the light of the display panel (11, 11a to 11c).

7. Operator control device according to one of the preceding claims, **characterised in that** the upper face (18) is of obliquely inward and downward running design.

8. Operator control device according to one of the preceding claims, **characterised in that** the outer edge (25) of the front part (17) projects above the outer face (21) of the cover (15) by less than 1.5 mm.

9. Operator control device according to one of the preceding claims, **characterised in that** the cover (15) is a glass plate, having in particular a thickness (d) of less than 10 mm, in particular of between 6 mm and 4 mm.

10. Operator control device according to one of the preceding claims, **characterised in that** at least some areas of the operator control element (13) are disposed within the surface area (12d) of at least one electronic display panel (11, 11a to 11c).

11. Operator control device according to claim 10, **characterised in that** at least some areas of the operator control element (13) are disposed inside the surface areas of at least two separate and adjacently disposed electronic display panels (11a to 11c), in particular a cover (15) covers both display panels (11a to 11c) at least in some areas at the front.

12. Operator control device according to one of the preceding claims, **characterised in that** on at least one area of a display panel (11, 11a to 11c) the information to be displayed can be changed as a function of the movement of the operator control element (13).

13. Operator control device according to one of the preceding claims, **characterised in that** a menu interface (14) to be displayed having at least two selectable menu items can be displayed around the operator control element (13) on a display panel (11, 11a to 11c), in particular in a ring section bordering the edge of the operator control element (13).

14. Household appliance having an operator control device (10) according to one of the preceding claims.

## Revendications

1. Dispositif de commande pour un appareil ménager (1), lequel comprend un champ d'affichage (11, 11a à 11c) électronique et un élément de commande (13) lequel, pour le réglage de conditions de fonctionnement de l'appareil ménager (1), est déplaçable par rapport au champ d'affichage (11, 11a à 11c),
l'élément de commande (13) étant incorporé au moins en partie dans un recouvrement (15) de l'au moins un champ d'affichage (11, 11a à 11c) électronique, et une partie avant (17) annulaire de l'élément de commande (13) faisant saillie avec son côté supérieur (18), au moins en partie, au-dessus du niveau d'un côté extérieur (21) du recouvrement (15), le côté supérieur (18) de la partie avant (17) annulaire étant en forme d'entonnoir et la partie avant (17) faisant saillie avec son bord extérieur (25) au-dessus du côté extérieur (21) du recouvrement (15), **caractérisé en ce que** les composants partiels (17, 19) de l'élément de commande (13) réalisés comme bague sont disposés dans une rainure (22) dans le côté extérieur (21) du recouvrement (15), et une zone partielle du côté extérieur (21) du recouvrement (15) étant entourée par la partie avant (17).

2. Dispositif de commande selon la revendication 1, **caractérisé en ce que** l'élément de commande (13) est réalisé comme sélecteur rotatif et **en ce que** la partie avant (17) est rotative par rapport au recouvrement (15).

3. Dispositif de commande selon la revendication 1 ou 2, **caractérisé en ce que** l'élément de commande (13) est réalisé en plusieurs parties et **en ce qu'**une bague de glissement (19) est disposée en dessous de la partie avant (17).

4. Dispositif de commande selon l'une quelconque des revendications précédentes, **caractérisé en ce que** l'élément de commande (13) réalisé comme bague présente des aimants (20), sachant qu'en interaction des aimants (20) avec des éléments métalliques stationnaires, notamment avec une araignée métallique (23) annulaire, un réglage de fonctionnement de l'appareil ménager (1) correspondant est détectable en fonction d'un mouvement relatif de l'élément de commande (13) par rapport aux éléments métalliques.

5. Dispositif de commande selon la revendication 4, **caractérisé en ce que** les éléments métalliques (23) sont disposés sur le côté arrière (24), notamment d'une rainure (26) sur le côté arrière (24), du recouvrement (15).

6. Dispositif de commande selon l'une quelconque des revendications précédentes, **caractérisé en ce que** le recouvrement (15) est perméable à la lumière du champ d'affichage (11, 11a à 11c).

7. Dispositif de commande selon l'une quelconque des revendications précédentes, **caractérisé en ce que** le côté supérieur (18) est réalisé en s'étendant de manière oblique vers l'intérieur et vers le bas.

8. Dispositif de commande selon l'une quelconque des revendications précédentes, **caractérisé en ce que** la partie avant (17), avec son bord extérieur (25), fait saillie de moins de 1,5 mm au-dessus du côté extérieur (21) du recouvrement (15).

9. Dispositif de commande selon l'une quelconque des revendications précédentes, **caractérisé en ce que** le recouvrement (15) est une plaque de verre, notamment **en ce qu'**il présente une épaisseur (d) inférieure à 10 mm, notamment comprise entre 6 mm et 4 mm.

10. Dispositif de commande selon l'une quelconque des revendications précédentes, **caractérisé en ce que** l'élément de commande (13) est disposé au moins en partie à l'intérieur de la zone de surface (12d) au moins d'un champ d'affichage (11, 11a à 11c) électronique.

11. Dispositif de commande selon la revendication 10, **caractérisé en ce que** l'élément de commande (13) est disposé au moins en partie à l'intérieur des zones de surface d'au moins deux champs d'affichage (11a à 11c) électroniques séparés et disposés de manière avoisinante l'un par rapport à l'autre, notamment **en ce qu'**un recouvrement (15) recouvre les deux champs d'affichage (11a à 11c) respectivement au moins en partie côté frontal.

12. Dispositif de commande selon l'une quelconque des revendications précédentes, **caractérisé en ce que** sur au moins une zone de champ d'un champ d'affichage (11, 11a à 11c), l'information à afficher est modifiable en fonction du mouvement de l'élément de commande (13).

13. Dispositif de commande selon l'une quelconque des revendications précédentes, **caractérisé en ce qu'**une surface de menu (14) à afficher peut être affichée autour de l'élément de commande (13) avec au moins deux options de menu sur un champ d'affichage (11, 11a à 11c), notamment dans une section annulaire qui est adjacente au bord de l'élément de commande (13).

14. Appareil ménager comprenant un dispositif de commande (10) selon l'une quelconque des revendications précédentes.
